# EUROPÄISCHE PATENTSCHRIFT

(11) **EP 1 743 140 B1**
(45) Veröffentlichungstag und Bekanntmachung des Hinweises auf die Patenterteilung: **13.04.2016**
(21) Anmeldenummer: 05732675.3
(22) Anmeldetag: 28.04.2005
(51) Int. Cl.: G01D 3/024, G01R 15/08, G01L 9/12

(54) **MESSANORDNUNG MIT AUSGÄNGEN VERSCHIEDENER EMPFINDLICHKEITEN**
MEASURING SYSTEM COMPRISING VARIABLY SENSITIVE OUTPUTS
DISPOSITIF DE MESURE COMPRENANT DES SORTIES DE DIFFERENTES SENSIBILITES

(30) Priorität: 07.05.2004 CH 806042004
(43) Veröffentlichungstag der Anmeldung: 17.01.2007
(73) Patentinhaber: Kistler Holding AG, 8408 Winterthur (CH)
(72) Erfinder: AMSTUTZ, Leo, CH-8413 Neftenbach (CH); WASER, Max P., CH-8335 Hittnau (CH); ENGELER, Paul, CH-8500 Frauenfeld (CH)
(86) Internationale Anmeldenummer: PCT/CH2005/000238
(87) Internationale Veröffentlichungsnummer: WO 2005/108929

(56) Entgegenhaltungen:
- EP-A- 0 092 746
- CH-A- 681 755
- US-A- 4 198 607
- US-A1- 2004 010 389

## Beschreibung

Die Erfindung betrifft eine Messanordnung zum Messen von physikalischen Grössen mit zwei oder mehr verschieden hoch auflösenden Ausgängen umfassend einen piezoelektrischen Sensor und zwei oder mehr Verstärker.

Messanordnungen umfassen im Wesentlichen einen Sensor, an dem ein Signal aufgenommen oder umgewandelt wird, und einen Verstärker, an dem das Signal verstärkt wird, bevor es zum Ausgang gelangt. Je nach Anwendung werden verschiedene Verstärkungen oder Umwandlungsfaktoren von Messsignalen verlangt. Üblicherweise kann ein Verstärker je nach Bedarf eingestellt werden: Es kann eine hohe Empfindlichkeit gewählt werden, sodass die Auflösung sehr hoch aber der gesamte Messbereich sehr klein ist, oder es kann eine niedrige Empfindlichkeit gewählt werden, sodass die Auflösung zwar sehr gering aber andererseits der gesamte Messbereich sehr gross ist.

Gewisse Anwendungen verlangen aber zu verschiedenen Zeiten verschiedene Auflösungsraten. Beispielsweise bei der Überwachung von Kraftverläufen von Spritzgiess- oder Druckgussmaschinen werden, während die Formhälften für den Einspritz- und Abkühlvorgang zusammengehalten werden, sehr hohe maximale Kräfte gemessen. Andererseits muss sichergestellt werden, dass während dem Schliessvorgang der Raum zwischen den Formhälften frei ist, dass also insbesondere kein zu entfernendes Teil hängen geblieben ist, welches beim Schliessen die Form beschädigen könnte. Dazu ist eine Auflösung des Kraftsignals notwendig, welche etwa 50 bis 100 mal höher ist als die des Signals im geschlossenen Zustand.

Ein anderes Anwendungsbeispiel des Erfordernisses zur Messung sowohl eines hochauflösenden schwachen Signals als auch einer Erfassung und Auswertung eines sehr starken Signals ist das Gebiet der Ballistik.

Es besteht demnach das Erfordernis der Erfassung sowohl hoher als auch geringer Amplituden mit relativ zu den Amplituden etwa identischen Auflösungen.

Dazu werden nach dem Stand der Technik beispielsweise zwei Messketten mit jeweils einem Sensor und einem Verstärker eingesetzt, welche individuell eingestellt werden können. Während die eine Messkette für die Wiedergabe geringer Kräfte in einen niedrigen Bereich und mit einer hohen Auflösung geeignet ist, ist die andere Messkette für die Wiedergabe grosser Kräfte mit einer hohen Amplitude und einer niedrigeren Auflösung geeignet. Die erste Messkette geht in die Sättigung über, wenn die Kräfte grösser werden.

Nachteil einer solchen Anordnung ist der Platzbedarf für beide Sensoren, die Notwendigkeit der doppelten Installation und die Kosten für zwei komplette Messketten.

Eine andere Möglichkeit besteht darin, lediglich eine Messkette zu verwenden, wobei der Verstärker zu gegebener Zeit umgeschalten werden muss auf eine neue gewünschte Empfindlichkeit. Nachteil dieser Anordnung ist die Diskontinuität im Messverlauf wie auch die Schwierigkeit, den richtigen Zeitpunkt der Umstellung zu finden.

Auch ist es möglich, ein auf einem elektrischen Signal überlagertes Teilsignal auszuwerten, wie dies in der CH 681755 beschrieben wurde. Da sich das Teilsignal aber nicht auf den selben Nullpunkt bezieht wie das Grundsignal, ist dieses Verfahren für die hier beschriebenen Anwendungen und Anforderungen ungeeignet.

Aufgabe der vorliegenden Erfindung ist es, eine Messkette eingangs beschriebener Art anzugeben, welche zwei oder mehr Ausgänge mit unterschiedlichen Empfindlichkeiten besitzt.

Eine weitere Aufgabe der Erfindung besteht darin, ein Gerät anzugeben zum Messen von Kräften, Drücken, Dehnungen, Momenten oder Beschleunigungen, welches zwei oder mehr Ausgänge mit unterschiedlichen Empfindlichkeiten besitzt.

Die Aufgabe wird gelöst durch die Merkmale des ersten und des achten Anspruchs.

### Kurzbeschreibung der Erfindung

Die erfindungsgemässe Messanordnung umfasst einen piezoelektrischen Sensor zur Messung von Kräften, Drücken, Dehnungen oder Momenten und zwei oder mehr Ladungsverstärker mit verschiedenen Verstärkungseinstellungen und je einem Ausgang sowie einen Signalteiler, der zwischen dem Sensor und den Verstärkern angeordnet ist. Während einer Messung wird ein Ladungssignal, das vom piezoelektrischen Sensor aufgenommen wird, am Signalteiler in zwei oder mehr Teilsignale aufgeteilt, die je in einen der Ladungsverstärker gelangen und dort verarbeitet werden und schliesslich zu den Ausgängen gelangen. Der Signalteiler umfasst vorzugsweise zwei oder mehr Kondensatoren. Die Messanordnung mit dem piezoelektrischen Sensor dient vornehmlich zur Messung von Kräften, Drücken, Dehnungen, Momenten oder Beschleunigungen.

### Detaillierte Beschreibung der Erfindung

Die Erfindung wird unter Verwendung der folgenden Zeichnungen erläutert. Es zeigen
- Fig. 1: eine Messanordnung nach dem Stand der Technik, schematisch dargestellt;
- Fig. 2: eine weitere Messanordnung nach dem Stand der Technik, schematisch dargestellt;
- Fig. 3: eine erfindungsgemässe Messanordnung, schematisch dargestellt;
- Fig. 4: eine weitere erfindungsgemässe Messanordnung, schematisch dargestellt;
- Fig. 5: ein erfindungsgemässes Gerät, schematisch dargestellt.

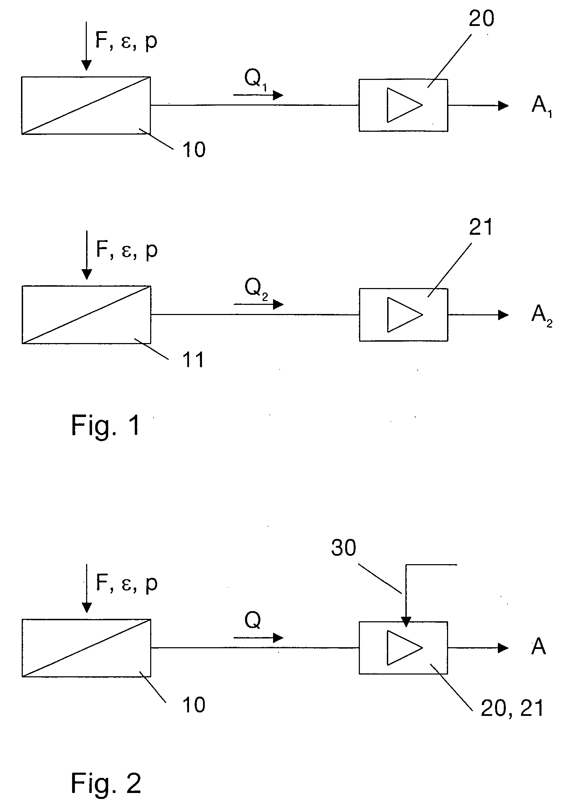

Die Fig. 1 zeigt zwei von einander unabhängige, parallel verlaufende Messketten nach dem Stand der Technik bestehend aus jeweils einem Sensor 10 und 11 und jeweils einem Verstärker 20 und 21, wobei die Verstärker 20 und 21 verschiedene Empfindlichkeiten aufweisen, sodass die an den Sensoren 10 und 11 beispielsweise durch Krafteinwirkungen aufgenommenen Ladungssignale Q1 und Q2 an den jeweiligen Ausgängen A1 und A2 der Verstärker 20 und 21 verschiedene Signalstärken und Empfindlichkeiten aufweisen.

Für diese Messketten sind zwei komplette Anordnungen notwendig, insbesondere zwei Sensoren 10 und 11, welche beide montiert werden müssen. Obwohl diese Lösung sehr kostspielig ist, wird sie angewendet.

Fig. 2 zeigt eine weitere Anordnung einer Messkette nach dem Stand der Technik. Diese Messkette umfasst lediglich einen Sensor 10 und einen Verstärker 20, 21 mit einer Einstellvorrichtung 30 für den Verstärker 20, 21, sodass der einzige Ausgang A je nach Einstellung der Empfindlichkeit dem ersten Sensors 20 oder dem zweiten Sensors 21 der Fig. 1 entsprechen kann. Diese Anordnung hat den Nachteil, dass zu jeder Zeit ein Ladungssignal Q entweder nur mit einer hohen oder nur mit einer geringen Empfindlichkeit verstärkt werden kann und dass Hinweise benötigt werden, welche den Zeitpunkt für eine Umschaltung festlegen.

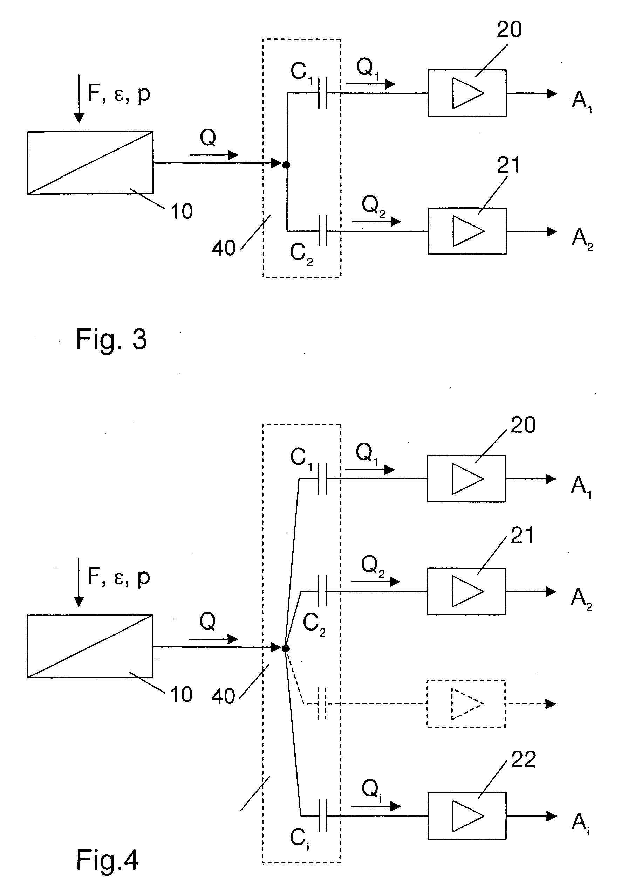

Die Fig. 3 zeigt einen schematischen Aufbau einer erfindungsgemässen Messkette. Die Messanordnung umfasst einen piezoelektrischen Sensor 10 und dient zur Messung von Kräften, Drücken, Dehnungen oder Momenten. Die Messanordnung umfasst ausserdem zwei Ladungsverstärker 20 und 21 mit verschiedenen Verstärkungen und je einem Ausgang A1 und A2 sowie einen Signalteiler 40, der zwischen dem Sensor 10 und den Verstärkern 20 und 21 angeordnet ist. Während einer Messung wird ein Ladungssignale Q, das vom piezoelektrischen Sensor 10 abgegeben wird, am Signalteiler 40 in zwei Teilsignale Q1 und Q2 aufgeteilt, die je in einen der Ladungsverstärker 20 oder 21 gelangen und dort verarbeitet werden und schliesslich zu den Ausgängen A1 und A2 gelangen. Da das Ladungssignal Q vom piezoelektrischen Sensor 10 eine sehr hohe Impedanz ausweist, umfasst der Signalteiler 40 vorzugsweise zwei geeignet angeordnete Kondensatoren C1 und C2. Die Kapazitäten der Kondensatoren C1 und C2 sollten vorzugsweise mindestens 10 mal grösser sein als die Kapazitäten des Kabels und des Sensors zusammen.

Durch die erfindungsgemässe Anordnung lassen sich zwei oder mehr Ladungsverstärker 20, 21 an genau einem Sensor 10 anschliessen. Ladungsverstärker 20, 21 lassen sich nicht direkt am Eingang zusammenschalten. Die erfindungsgemässe Messanordnung wird durch geeignet angeordnete Kondensatoren C1 und C2 erreicht, welche dank dem virtuellen Nullpunkt am Ladungsverstärkereingang den Signalteiler 40 bilden. Dieser Signalteiler 40 wird aber von der Kapazität der Zuleitung und des Sensors verfälscht. Durch entsprechendes Dimensionieren des Signalteilers 40 können die Fehler klein gehalten oder ausgeglichen werden und die Ladungen auf die Ladungsverstärker 20, 21 so verteilt werden, dass kleine und grosse Signale gleichzeitig gemessen werden können. Bei identischen Kondensatoren C1, C2 ist der Fehler in beiden Kanälen gleich gross.

Die Kapazitäten der Kondensatoren C1, C2 weisen demnach dieselben Grössenordnungen auf und unterscheiden sich vorzugsweise höchstens um einen Faktor 10 voneinander. Gemäss den Kapazitäten sind auch die Ladungssignale Q1 und Q2 gleich oder ähnlich.

Die Verstärkungen der Ladungsverstärker 20, 21 unterscheiden sich beispielsweise um einen Faktor bis 100. Dadurch weist der Ausgang A1 eine beispielsweise 1000 mal höhere Empfindlichkeit auf als der Ausgang A2, während der Bereich des Ladungsverstärkers 21 um denselben Faktor höher ist als der Bereich des Ladungsverstärkers 20. Typisch ist allerdings ein Empfindlichkeitsunterschied im Bereich des Faktors 100.

Fig. 4 zeigt dieselbe erfindungsgemässe Anordnung wie Fig. 3, wobei der Signalteiler 40 das ursprüngliche Ladungssignal Q mittels mehrerer Kondensatoren C1, C2, Ci in mehrere Teilladungssignale Q1, Q2, Qi aufteilt. Entsprechend enthält diese Messkette mehrere Ladungsverstärker 20, 21, 22 und mehrere Ausgänge A1, A2, Ai.

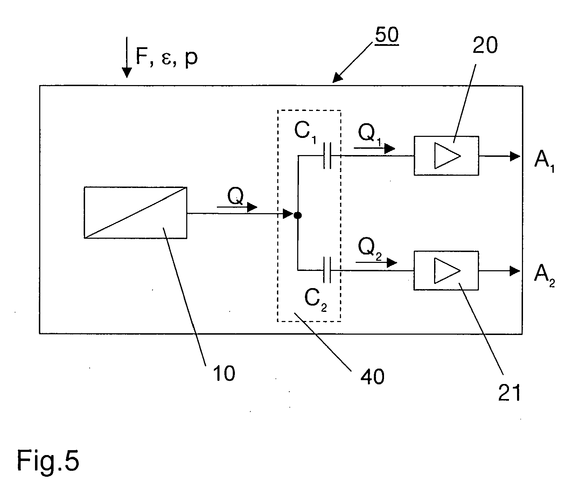

Fig. 5 zeigt ein Gerät 50, welches eine gesamte Messanordnung nach Fig. 3 umfasst, mit zwei Ausgängen A1 und A2, wobei der Sensor 10 integriert ist. Entsprechend kann ein Gerät 50 auch eine Messanordnung gemäss Fig. 4 enthalten und mehrere Ausgänge A aufweisen.

Der Vorteil dieser Anordnung, sei es als Messkette oder als Gerät 50, besteht darin, dass kein Umschalten einer Verstärkereinheit erforderlich ist und dass alle Signale an den Ausgängen A1, A2 und A3 gleichzeitig ablesbar sind. Ein weiterer Vorteil dieser erfindungsgemässen Messkette oder dieses erfindungsgemässen Gerätes besteht darin, dass dafür nur ein Sensor notwendig ist, was die Kosten und den Aufwand der Messung gering hält.

Weiterhin besteht die Möglichkeit, die erfindungsgemässe Messanordnung mit der Anordnung aus der CH 681755 zu kombinieren.

Dies ermöglicht zusätzlich eine Zoomfunktion in einem beliebigen Bereich, wobei der Nullpunkt dann irrelevant ist.

### Liste der Bezeichnungen

- 10: piezoelektrischer Sensor
- 11: zweiter piezoelektrischer Sensor
- 20: erster Ladungsverstärker
- 21: zweiter Ladungsverstärker
- 22: weiterer Ladungsverstärker
- 30: Umschaltungsvorrichtung der Verstärkereinheit
- 40: Signalteiler
- 50: Gerät
- A: Ausgang
- C: Kondensator
- Q: Ladungssignal
- F: Kraft
- ε: Spannung
- P: Druck

## Patentansprüche

1. Messanordnung zum Messen von physikalischen Grössen mit zwei oder mehr Ausgängen (A1, A2, Ai) mit verschieden hohen Empfindlichkeiten umfassend einen piezoelektrischen Sensor (10), der Kräfte, Drücke, Dehnungen oder Momente messen kann, und zwei oder mehr Ladungsverstärker (20, 21, 22) mit verschiedenen Verstärkungseinstellungen, **dadurch gekennzeichnet, dass** zwischen dem Sensor (10) und den Ladungsverstärkern (20, 21, 22) ein Signalteiler (40) angeordnet ist, welcher während einer Messung ein Ladungssignal (Q) von dem Sensor (10) in Teilladungssignale (Q1, Q2, Qi) teilen kann, die je in einem der Ladungsverstärker (20, 21) verarbeitet werden können.

2. Messanordnung gemäss Anspruch 1, **dadurch gekennzeichnet, dass** im Signalteiler (40) vor jedem Ladungsverstärker 20, 21) ein Kondensator (C1, C2) angeordnet ist.

3. Messanordnung gemäss Anspruch 2, **dadurch gekennzeichnet, dass** die Kapazitäten der Kondensatoren (C1, C2) dieselben Grössenordnungen aufweisen und sich vorzugsweise höchstens um einen Faktor 10 voneinander unterscheiden.

4. Messanordnung gemäss Anspruch 2 oder 3, **dadurch gekennzeichnet, dass** sich die Verstärkungseinstellung der Ladungsverstärkers (20, 21) um einen Faktor bis 100 mal unterscheiden.

5. Messanordnung gemäss einem der Ansprüche 1 bis 4, **dadurch gekennzeichnet, dass** sich die Empfindlichkeiten der Ausgänge (A1, A2) um einen Faktor bis 1000 unterscheiden.

6. Gerät (50) umfassend eine Messanordnung gemäss einem der vorhergehenden Ansprüche.

## Claims

1. A measuring arrangement for the measurement of physical parameters having two or more outputs (A1, A2, Ai) with different levels of sensitivity comprising a piezoelectric sensor (10) capable of measuring forces, pressures, elongations, or moments, and two or more charge amplifiers (20, 21, 22) with different amplifier settings **characterized in that** between said sensor (10) and said charge amplifiers (20, 21, 22) a signal splitter (40) is interposed that, during a measurement, is capable of splitting a charge signal (Q) from the sensor (10) in partial charge signals (Q1, Q2, Qi) each of which can be processed in one of the charge amplifiers (20, 21).

2. A measuring arrangement according to claim 1 **characterized in that** within the signal splitter (40) a capacitor (C1, C2) is arranged in front of each charge amplifier (20, 21).

3. A measuring arrangement according to claim 2 **characterized in that** the capacitances of the capacitors (C1, C2) have the same order of magnitude and preferably differ from each other by a factor of not more than 10.

4. A measuring arrangement according to claim 2 or 3 **characterized in that** the amplifier settings of the charge amplifiers (20, 21) differ by a factor of up to 100 times.

5. A measuring arrangement according to any of the claims 1 to 4 **characterized in that** the sensitivities of the outputs (A1, A2) differ by a factor of up to 1000.

6. An apparatus (50) comprising a measuring arrangement according to any of the preceding claims.

## Revendications

1. Un dispositif de mesure pour la mesure de paramètres physiques ayant deux ou plusieurs sorties (A1, A2, Ai) à différents niveaux de sensibilité comprenant un capteur piézo-électrique (10) capable de mesurer des forces, des pressions, des allongements ou des moments et ayant deux ou plusieurs amplificateurs de charge (20, 21, 22) chacun avec un réglage de l'amplificateur différent **caractérisé en ce que** entre ledit capteur (10) et lesdits amplificateurs de charge (20, 21, 22) est interposé un séparateur de signaux (40) qui, pendant une mesure, est capable de diviser un signal de charge (Q) du capteur (10) en signaux de charge partiels (Q1, Q2, Qi) dont chacun peut être traité dans l'un des amplificateurs de charge (20, 21).

2. Un dispositif de mesure selon la revendication 1 **caractérisé en ce que** à l'intérieur du séparateur de signaux (40) un condensateur (C1, C2) est monté devant chacun amplificateur de charge (20, 21).

3. Un dispositif de mesure selon la revendication 2 **caractérisé en ce que** les capacités desdits condensateurs (C1, C2) ont le même ordre de grandeur et de préférence diffèrent les uns des autres d'un facteur d'au plus 10.

4. Un dispositif de mesure selon la revendication 2 ou 3 **caractérisé en ce que** le réglage de l'amplificateur desdits amplificateurs de charge (20, 21) diffère d'un facteur d'au plus 100 fois.

5. Un dispositif de mesure selon l'une quelconque des revendications 1 à 4 **caractérisé en ce que** les sensibilités des sorties (A1, A2) diffèrent d'un facteur d'au plus 1000.

6. Un appareil (50) comprenant un dispositif de mesure selon l'une quelconque des revendications précédentes.
